# EUROPEAN PATENT SPECIFICATION

(11) **EP 1 922 238 B1**
(45) Date of publication and mention of the grant of the patent: **23.12.2009**
(21) Application number: 06784129.6
(22) Date of filing: 31.08.2006
(51) Int. Cl.: B62B 9/28

(54) **STANDING BOARD FOR CHILDREN**
FUSSPLATTFORM FÜR KINDER
PLATE-FORME POUR ENFANTS

(30) Priority: 05.09.2005 SE 0501969
(43) Date of publication of application: 21.05.2008
(73) Proprietor: Lundh, Jöran, Kowloon Hong Kong SAR (CN)
(72) Inventor: Lundh, Jöran, Kowloon Hong Kong SAR (CN)
(74) Representative: Jörgensson, Leif Sixten
(86) International application number: PCT/SE2006/000997
(87) International publication number: WO 2007/030054

(56) References cited:
- EP-A- 1 550 596
- EP-A2- 1 550 596
- WO-A-2005/039954
- WO-A1-2005/039954
- DE-U1- 20 213 848
- DE-U1- 20 306 242
- DE-U1- 20 306 242
- GB-A- 2 328 907

## Description

This invention is a standing board for children's prams, which can be used in connection with most current pram designs.

Relevant background art is reflected in WO-A-05/039954 on which the preamble to appended claim 1 is based.

Standing boards are used for prams primarily to make it possible for an additional child to be transported with the pram. In addition, a standing board can be used for the transport of goods. The standing board is fixed to the pram by beams that reach from the standing board to suitable fastening points on the pram. In order to facilitate connection to as many types of pram on the market as possible, the beams are adjustable to fit the fastening points. The present invention is a standing board of this adjustable type.

The purpose of the present invention is to facilitate a simple adjustment of the fastening beams so the standing board can be utilised for a large variety of pram designs. According to the invention, this is achieved by a standing board having the features defined in appended claims 1. The standing board is fastened to the pram by fastening beams that reach from the standing board and have means for fastening to the pram on the far end of the beams. The fastening beams are aligned in the direction of the standing board's normal direction of movement and are basically parallel to the standing board itself and are adjustable in a right angle to the movement direction. It is also mounted on the forward edge of the standing board with devices to maintain the beams in their set positions. The fastening beams can be adjusted along the forward edge of the standing board, i.e. across the preconceived movement direction of the standing board. The angle of the fastening beams related to the standing board is fixed and depends only on the angle of the front of the standing board in relation to the supporting surface to be used for transport. In order to facilitate adjustment to different pram designs the fastening beams are designed to be able to be twisted in the fastening points for adjustment of their angle against the supporting surface of the standing board.

The particularities of the invention are described in the appended claims.

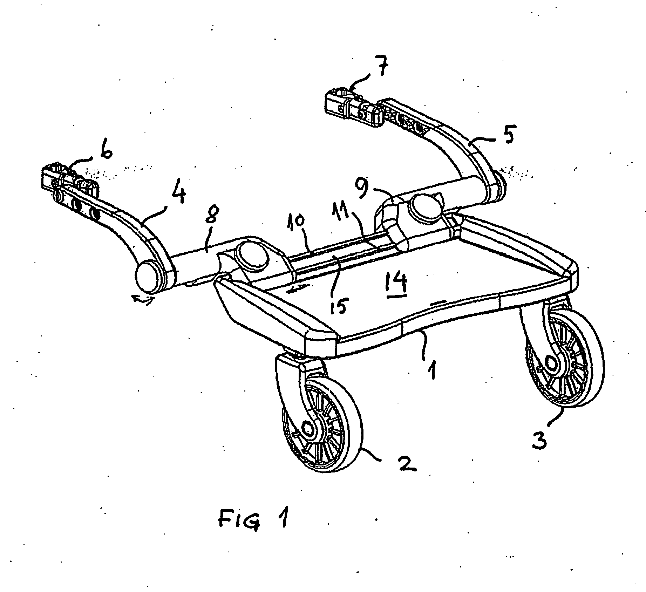

The following is a detailed description of the invention with references to the included illustrations, which shows an example of its design.
Figure 1 shows a standing board according to the invention described above.

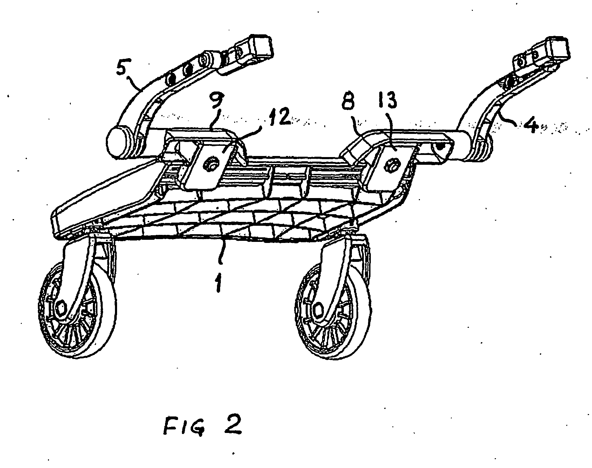

Figure 2 shows a standing board in figure 1 seen at an angle from below.
   The standing board has a supporting board or area 1 with a supporting surface 14 for the child or the goods to be transported. Under the board are two wheels 2, 3, which can rotate around their respective axles and twist around their fastenings in an axle at a right angle to the supporting area. In the front of the supporting area 14 is an edge 15, which is mounted at an angle in relation to the supporting area. Two guides 10,11 are raised in relation to the otherwise level surface of the edge. The beam fastenings 8, 9 are connected to the edge and together with the clamps 12 and 13 will grip a major portion of the edge. Using the clamps, the supporting beams are locked sideways after having been adjusted to the desired width for the pram to which the standing board is to be mounted. The fastening beams 4, 5 are mounted in the outer end and can be locked in their adjusted positions. The direction of movement of the fastening beams and the fastenings, which can be twisted, are shown in figure 1 with bidirectional arrows 16, 17. At the outer end of the fastening beams there are means 6,7, which can also be twisted for connection of the standing board to the pram.

## Claims

1. A standing board for prams, comprising a wheeled supporting board (1) which has a supporting area (14) and which is mountable to a pram by fastening beams (4, 5) protruding from the supporting board (1) in a normal movement direction of the standing board and basically in parallel with the supporting board (1), wherein the outer ends of the fastening beams (4, 5) have means (6, 7) for fastening to the pram and wherein the supporting board (1) has an edge (15) in front of the supporting area (14) for fastening of the fastening beams (4, 5); **characterized in that** the fastening beams (4, 5) are mounted to said edge (15) by means of fastenings (8, 9) which are adjustable along said edge (15) in a straight angle with respect to the forward movement direction of the standing board; and that the fastening beams (4, 5) comprise means for fixing said fastenings (8, 9) in their adjusted position on the supporting board (1).

2. A standing board as claimed in claim 1, wherein the fastening beams (4, 5) are able to be twisted in their fastenings and able to be locked in their adjusted positions for setting an angle with respect to the supporting area (14) of the supporting board (1).

3. A standing board as claimed in claims 1 or 2, wherein said edge (15) is mounted forward and upwards at an angle in relation to the supporting area (14).

4. A standing board as claimed in any one of the preceding claims, wherein said edge (15) comprises a generally level surface and one or more guides (10, 11) protruding from said surface.

## Patentansprüche

1. Stehplattform für Kinderwägen, die eine Stehplattform (1) mit Rädern aufweist, die eine Standfläche (14) hat, und die an einem Kinderwagen durch Befestigungsausleger (4, 5) angebracht werden kann, die von der Stehplattform (1) in einer normalen Bewegungsrichtung der Stehplattform hervorstehen und im Wesentlichen parallel zu der Stehplattform (1) verlaufen, wobei die äußeren Enden der Befestigungsausleger (4,5) Mittel (6, 7) zum Befestigungen am Kinderwagen besitzen und wobei die Stehplattform (1) eine Kante (15) vor der Standfläche (14) zum Befestigen der Befestigungsausleger (4,5) aufweist;
**dadurch gekennzeichnet, dass**
die Befestigungsausleger (4, 5) an der Kante (15) durch Befestigungselemente (8, 9) befestigt sind, die entlang der Kante (15) in einem geraden Winkel bezüglich der Bewegung in Vorwärtsrichtung der Stehplattform einstellbar sind;
und dass die Befestigualgsausleger (4, 5) Mittel zum Fixieren der Befestigungselemente (8, 9) in der eingestellten Position auf der Stehplatttorm (1) aufweisen.

2. Stehptattform gemäß Anspruch 1, wobei die Befestigungsausleger (4, 5) in ihren Befestigungselementen gedreht werden können und in der eingestellten Position festgestellt werden können, um einen Winkel bezüglich der Standfläche (14) der Stehplattform (1) festzulegen.

3. Stehplattform gemäß einem der Ansprüche 1 oder 2, wobei die Kante (15) nach vorne und oben in einem Winkel bezüglich der Standfläche (14) befestigt ist.

4. Stehplattform gemäß einem der vorhergehenden Ansprüche, wobei die Kante (15) eine allgemein ebene Oberfläche aufweist und eine oder mehrere Führungen (10, 11) von der Oberfläche hervorstehen.

## Revendications

1. Plate-forme pour landau comportant une plaque de support (1) montée sur roues, qui a une surface porteuse (14) et qui peut être montée sur un landau au moyen de bras de fixation (4, 5) dépassant de la plaque de support (1) dans la direction normale du déplacement de la plate-forme et essentiellement parallèle à la plaque de support (1), dans laquelle les extrémités extérieures des bras de fixation (4, 5) ont des moyens (6, 7) et dans laquelle la plaque de support (1) a un bord (15) face à la surface porteuse (14) pour la fixation des bras de fixation (4, 5), **caractérisée en ce que** les bras de fixation (4, 5) sont montés sur ledit bord (15) au moyen de fixations (8, 9) ajustables le long desdits bords (15) formant un angle droit avec la direction du mouvement vers l'avant de la plate-forme et **en ce que** les bras de fixation (4, 5) comportent des moyens pour bloquer lesdites fixations (8, 9) dans leur position ajustée sur la plaque de support (1).

2. Plate-forme selon la revendication 1, dans laquelle les bras de fixation (4, 5) peuvent être tournés dans leur position ajustée pour régler un angle par rapport à la surface porteuse (14) de la plaque de support (1).

3. Plate-forme selon la revendication 1 ou 2, dans laquelle ledit bord (15) est monté vers l'avant et vers le haut selon un angle relatif à la surface porteuse.

4. Plate-forme selon l'une des revendications précédentes, dans laquelle ledit bord (15) comporte une surface généralement plate et un ou plusieurs guides (10, 11) faisant saillie de ladite surface.
